# EUROPÄISCHE PATENTSCHRIFT

(11) **EP 4 374 101 B1**
(45) Veröffentlichungstag und Bekanntmachung des Hinweises auf die Patenterteilung: **02.09.2026**
(21) Anmeldenummer: 22733340.8
(22) Anmeldetag: 07.06.2022
(51) Int. Cl.: F17C 1/00, F17C 13/12

(54) **ABLEITUNGSSYSTEM**
DISCHARGE SYSTEM
SYSTÈME DE DÉRIVATION

(30) Priorität: 23.07.2021 DE 102021207904
(43) Veröffentlichungstag der Anmeldung: 29.05.2024
(73) Patentinhaber: Robert Bosch GmbH, 70442 Stuttgart (DE)
(72) Erfinder: OHLHAFER, Olaf, 74391 Erligheim (DE); SCHUELKE, Armin, 71134 Aidlingen (DE)
(86) Internationale Anmeldenummer: PCT/EP2022/065357
(87) Internationale Veröffentlichungsnummer: WO 2023/001443

(56) Entgegenhaltungen:
- DE-A1- 102013 226 913
- JP-A- 2004 136 828
- JP-A- 2007 106 262

## Beschreibung

Die vorliegende Erfindung betrifft ein Ableitungssystem für einen mit einem brennbaren Fluid befüllten wenigstens einen Druckbehälter gemäß dem Oberbegriff des Anspruches 1, ein Druckbehältersystem gemäß dem Oberbegriff des Anspruches 12, ein Brennstoffzellensystem gemäß dem Oberbegriff des Anspruches 13 und ein Kraftfahrzeug gemäß dem Oberbegriff des Anspruches 14.

### Stand der Technik

Brennstoffzelleneinheiten als galvanische Zellen wandeln mittels Redoxreaktionen an einer Anode und Kathode kontinuierlich zugeführten Brennstoff und Oxidationsmittels in elektrische Energie um. Brennstoffzellen werden in den unterschiedlichsten stationären und mobilen Anwendungen eingesetzt, beispielweise in Häusern ohne Anschluss an ein Stromnetz oder in Kraftfahrzeugen, im Schienenverkehr, in der Luftfahrt, in der Raumfahrt und in der Schifffahrt. In der Brennstoffzelleneinheit sind eine große Anzahl an Brennstoffzellen zu dem Brennstoffzellenstapel als Brennstoffzellenstack gestapelt. In dem Brennstoffzellenstapel sind Kanäle zum Durchleiten von Brennstoff, Kanäle zum Durchleiten von Oxidationsmittel und Kanäle zum Durchleiten von Kühlmittel integriert. Der Brennstoff wird in einem Druckgasspeicher gespeichert. Dabei sind häufig mehrere Druckgasspeicher als Druckbehälter zu einem Druckbehältersystem zusammengefasst. Bei außergewöhnlichen Betriebszuständen, beispielsweise bei einem Brand in einem Kraftfahrzeug, wird mit einem Ablassventil als Absperrorgan als TPRD (temperatur pressure relief device) ab dem Überschreiten eines vorgegebenen Grenzwertes eines Ausleitungsparameters, beispielsweise einer Temperatur von beispielsweise 200 oder 300 °C an einem Druckbehälter, aus Sicherheitsgründen der Brennstoff aus dem Druckbehältersystem stets und unverzüglich in die Umgebung abgeleitet ohne weitere Steuerung und/oder Regelung. In Kraftfahrzeugen mit einer Brennstoffzelleneinheit zum Antrieb des Kraftfahrzeuges mittels elektrischer Energie aus der Brennstoffzelleneinheit stellt der bei den außergewöhnlichen Betriebszuständen ausgeleitete Wasserstoff eine hohe Gefahr dar. Wasserstoff verbrennt mit einer nicht sichtbaren Wasserstoffflamme. Bei hohen Temperaturen, einem Funken oder einer anderen Flamme oder einer Umgebung in der Nähe von Ablassöffnungen besteht das Risiko eines Entzündens und Verbrennens des abgeleiteten Wasserstoffes als Wasserstoffflamme. Dadurch besteht insbesondere für Personen in der Nähe des Kraftfahrzeuges, beispielsweise Rettungskräfte, eine hohe Verletzungsgefahr.

Die DE 10 2013 226913 A1 beschreibt ein Ableitungssystem für einen mit einem brennbaren Fluid befüllten wenigstens einen Druckbehälter zur Ausleitung des brennbaren Fluids in eine Umgebung.

Die DE 10 2012 000 096 A1 zeigt eine Temperatur-Druck-Entlastungsvorrichtung für ein Druckgefäß, umfassend eine Temperatur-Druck-sensitive Einheit, die derart konfiguriert ist, einen Druck des Druckgefäßes zu entlasten, wenn eine vorbestimmte Temperatur und/oder ein vorbestimmter Druck überschritten wird.

Die US 8,955,762 B2 zeigt ein Ablassventil als TPRD (temperatur pressure relief device) mit einem Gehäuse mit einer Einlassöffnung und Entlastungsöffnung. Ein Kolben als Schließorgan ist in dem Gehäuse gelagert. Eine Feder dient zur Bewegung des Schließorganes von einer Schließstellung in eine Öffnungsstellung. Ein Aktuator verändert seine Eigenschaft, nämlich das Volumen des Aktuators, in Abhängigkeit von der Temperatur, so dass mittels des Aktuators die Bewegung des Schließorganes von der Schließstellung in die Öffnungsstellung aktiviert werden kann.

### Offenbarung der Erfindung

### Vorteile der Erfindung

Erfindungsgemäßes Ableitungssystem für einen mit einem brennbaren Fluid befüllten wenigstens einen Druckbehälter zur Ausleitung des brennbaren Fluides aus dem wenigstens einen Druckbehälter in die Umgebung,
umfassend wenigstens ein Ablassventil dafür konfiguriert zum Ausleiten des Fluides aus dem wenigstens einen Druckbehälter ab Überschreitung eines vorgegebenen Grenzwertes eines Ausleitungsparameters, wenigstens eine Einleitungsöffnung dafür konfiguriert zum Einleiten des Fluides von dem wenigstens einen Druckbehälter in das wenigstens eine Ablassventil, wenigstens eine Ablassöffnung dafür konfiguriert zum Ausleiten des Fluides in die Umgebung, wobei vorzugsweise das Ableitungssystem wenigstens einen Sensor zur Erfassung der Umgebungstemperatur und/oder Umgebungsstrahlung in der Umgebung der wenigstens einen Ablassöffnung umfasst und in Abhängigkeit von der mit dem wenigstens einen Sensor erfassten Umgebungstemperatur und/oder Umgebungsstrahlung das Ausleiten des Fluides aus der wenigstens einen Ablassöffnung steuerbar und/oder regelbar ist, insbesondere ab oder bei oder während dem Überschreiten des vorgegebenen Grenzwertes des Ausleitungsparameters. Zur Steuerung und/oder Regelung des Ausleitens des brennbaren Fluides aus dem wenigstens einen Druckbehälter wird somit zusätzlich auch die Umgebungstemperatur und/oder die Umgebungsstrahlung für die Ausleitung berücksichtigt, um ein Entzünden des ausgeleiteten Fluides in der Umgebung zu vermeiden.

In einer ergänzenden Variante ist ab dem Überschreiten wenigstens eines vorgegebenen Grenzwertes der Umgebungstemperatur und/oder Umgebungsstrahlung in der Umgebung der wenigstens einen Ablassöffnung das Ausleiten des Fluides aus wenigstens einer Ablassöffnung blockierbar und vorzugsweise ist der vorgegebene Grenzwert der Umgebungstemperatur und/oder der Umgebungsstrahlung je einer Ablassöffnung zugeordnet.

In einer weiteren Ausführungsform ist ab dem Überschreiten eines vorgegebenen Grenzwertes der Umgebungstemperatur und/oder Umgebungsstrahlung in der Umgebung einer Ablassöffnung, insbesondere sämtlichen Ablassöffnungen, das Ausleiten des Fluides aus einer, insbesondere nur einer, Ablassöffnung ausführbar und vorzugsweise das Ausleiten aus den anderen Ablassöffnungen, insbesondere sämtlichen anderen Ablassöffnungen, blockierbar ist und vorzugsweise die nur eine Ablassöffnung diejenige Ablassöffnung ist mit der minimalen Umgebungstemperatur und/oder minimalen Umgebungsstrahlung sämtlicher Ablassöffnungen. Damit ist beispielsweise bei einem Überschreiten des vorgegebenen Grenzwertes der Umgebungstemperatur und/oder Umgebungsstrahlung in der Umgebung sämtlichen Ablassöffnungen (Anzahl der Ablassöffnungen n) das Ausleiten des Fluides aus der nur einen Ablassöffnung (Anzahl der Ablassöffnung 1) ausführbar, d. h. das Ausleiten aus der nur einen Ablassöffnung ist nicht blockiert und das Ausleiten aus sämtlichen anderen Ablassöffnungen (Anzahl der Ablassöffnungen n-1) blockiert ist. Damit ist gewährleistet, dass auch bei einem Überschreiten des vorgegebenen Grenzwertes der Umgebungstemperatur und/oder Umgebungsstrahlung in der Umgebung sämtlichen Ablassöffnungen ein Ablassen des Fluides aus der nur einen Ablassöffnung ausführbar ist, um beispielsweise eine Explosion eines Druckbehälters aufgrund eines großen Überdruckes zu verhindern. Vorzugsweise sind die Umgebungsventile, insbesondere 3/2-Wegenventile, dahingehend in die Ablassleitungen eingebaut so dass auch bei einem stromlosen Kraftfahrzeug aus der nur einen, insbesondere stets identischen, Ablassöffnung das Fluid ausleitbar ist. Dabei ist vorzugsweise die nur eine, insbesondere stets identische Ablassöffnung, eine Ablassöffnung beispielsweise an dem Dach eines Kraftfahrzeuges mit einem geringen Gefahrenrisiko.

In einer weiteren Variante ist ausschließlich ab dem Überschreiten des vorgegebenen Grenzwertes des Ausleitungsparameters das Ausleiten des Fluides aus der wenigstens einen Ablassöffnung ausführbar und das Ausleiten des Fluides aus der wenigstens einen Ablassöffnung während des Überschreitens des vorgegebenen Grenzwertes des Ausleitungsparameters nur dann blockierbar ist, falls der Grenzwert der Umgebungstemperatur und/oder Umgebungsstrahlung in der Umgebung je einer Ablassöffnung überschritten ist. Vorzugsweise ist ausschließlich ab dem Überschreiten des vorgegebenen Grenzwertes des Ausleitungsparameters das Ausleiten des Fluides aus der wenigstens einen Ablassöffnung ausführbar, d. h. grundsätzliche Voraussetzung für das Ausleiten ist als erste Bedingung das Überschreiten des vorgegebenen Grenzwertes des Ausleitungsparameters, jedoch ist das tatsächliche Ausleiten an je einer Ablassöffnung abhängig von der Umgebungstemperatur und/oder Umgebungsstrahlung als zweite Bedingung an dieser je einen Ablassöffnung, so dass das tatsächliche Ausleiten aus der je einen Ablassöffnung nur dann ausführbar ist, falls beide Bedingungen erfüllt sind.

In einer zusätzlichen Ausführungsform ist das Ausleiten des Fluides aus der wenigstens einen Ablassöffnung ab dem Überschreiten des vorgegebenen Grenzwertes der Umgebungstemperatur und/oder Umgebungsstrahlung in der Umgebung der wenigstens einen Ablassöffnung mittels wenigstens eines Umgebungsventils blockierbar.

Zweckmäßig ist je einer Ablassöffnung ein Umgebungsventil zugeordnet.

In einer ergänzenden Ausgestaltung ist das wenigstens eine Umgebungsventil ein zusätzliches Ventil in Ergänzung zu dem Ablassventil.

Vorzugsweise umfasst das Ableitungssystem mehrere Ablassöffnungen und die Umgebungstemperaturen und/oder Umgebungsstrahlungen an den Ablassöffnungen sind getrennt erfassbar.

In einer weiteren Variante umfasst das Ableitungssystem mehrere Sensoren zur Erfassung der Umgebungstemperatur und/oder Umgebungsstrahlung in der Umgebung der wenigstens einen Ablassöffnung, insbesondere ist je einer Ablassöffnung je wenigstens ein Sensor zur Erfassung der Umgebungstemperatur und/oder Umgebungsstrahlung in der Umgebung der je einen Ablassöffnung zugeordnet. Vorzugweise weist der je wenigstens eine Sensor zur Erfassung der Umgebungstemperatur und/oder Umgebungsstrahlung in der Umgebung der je einen Ablassöffnung, welcher der je einen Ablassöffnung zugeordnet ist, einen Abstand zu der je einen Ablassöffnung auf, welcher kleiner als 30 cm, 20 cm 10 cm oder 5 cm ist.

In einer weiteren Ausführungsform sind die Umgebungstemperaturen und/oder Umgebungsstrahlungen in der Umgebung mehrerer Ablassöffnungen simultan erfassbar und je größer die Umgebungstemperatur und/oder Umgebungsstrahlung an je einer Ablassöffnung ist, desto kleiner ist der aus der Ablassöffnung ausleitbare Volumenstrom des Fluides und umgekehrt.

Zweckmäßig sind die Umgebungstemperaturen und/oder Umgebungsstrahlungen in der Umgebung mehrerer Ablassöffnungen simultan erfassbar und ab dem Überschreiten des vorgegebenen Grenzwertes der Umgebungstemperatur und/oder Umgebungsstrahlung in der Umgebung je einer Ablassöffnung das Ausleiten des Fluides aus der je einen Ablassöffnung blockierbar ist und/oder ab dem Unterschreiten des vorgegebenen Grenzwertes der Umgebungstemperatur und/oder Umgebungsstrahlung in der Umgebung je einer Ablassöffnung das der je einen Ablassöffnung zugeordnete wenigstens eine Umgebungsventil vollständig geöffnet ist und/oder in einer vollständigen Öffnungsposition positionierbar ist, so dass insbesondere das Ausleiten des Fluides aus den Ablassöffnungen steuerbar und/oder regelbar indem die Umgebungsventile stets vollständig geöffnet oder stets vollständig geschlossen sind. Bei einem Umgebungsventil, das vollständig geschlossen ist, ist das Ausleiten des Fluides aus der diesem Umgebungsventil zugeordneten Ablassöffnung blockiert.

Erfindungsgemäßes Druckbehältersystem, umfassend wenigstens einen Druckbehälter zur Befüllung mit einem brennbaren Fluid, ein Ableitungssystem für den mit dem brennbaren Fluid befüllbaren wenigstens einen Druckbehälter zur Ausleitung des brennbaren Fluides aus dem wenigstens einen Druckbehälter in die Umgebung ab dem Überschreiten eines vorgegebenen Grenzwertes des Ausleitungsparameters, wobei das Ableitungssystem als ein in dieser Schutzrechtsanmeldung beschriebenes Ableitungssystem ausgebildet ist.

Erfindungsgemäßes Brennstoffzellensystem, insbesondere für ein Kraftfahrzeug, umfassend eine Brennstoffzelleneinheit, ein Druckbehältersystem mit wenigstens einem Druckbehälter zur Befüllung mit einem brennbaren Fluid und einem Ableitungssystem für den mit dem brennbaren Fluid befüllbaren wenigstens einen Druckbehälter zur Ausleitung des brennbaren Fluides aus dem wenigstens einen Druckbehälter in die Umgebung ab dem Überschreiten eines vorgegebenen Grenzwertes des Ausleitungsparameters, eine Gasfördervorrichtung zur Förderung eines gasförmigen Oxidationsmittels zu Kathoden der Brennstoffzellen, wobei das Druckbehältersystem als ein in dieser Schutzrechtsanmeldung beschriebenes Druckbehältersystem ausgebildet ist.

Kraftfahrzeug, umfassend eine Karosserie, mehrere Räder, ein Druckbehältersystem, umfassend wenigstens einem Druckbehälter zur Befüllung mit einem brennbaren Fluid und ein Ableitungssystem für den mit dem brennbaren Fluid befüllbaren wenigstens einen Druckbehälter zur Ausleitung des brennbaren Fluides aus dem wenigstens einen Druckbehälter in die Umgebung ab dem Überschreiten eines vorgegebenen Grenzwertes des Ausleitungsparameters, wenigstens eine Umwandlungseinheit als eine Brennstoffzelleneinheit und/oder einen Verbrennungsmotor, welcher mit dem brennbaren Fluid aus dem Druckbehältersystem betreibbar ist, wobei das Druckbehältersystem als ein in dieser Schutzrechtsanmeldung beschriebenes Druckbehältersystem ausgebildet ist.

Insbesondere ist der Ausleitungsparameter zur Steuerung und/oder Regelung des wenigstens einen Ablassventils die Temperatur des Fluides in dem Druckbehälter und/oder die Temperatur des wenigstens einen Ablassventils und/oder der Druck des Fluides in dem Druckbehälter. Vorzugsweise ist somit ab dem Überschreiten des vorgegebenen Grenzwertes der Temperatur und/oder des vorgegebenen Grenzwertes des Druckes des Druckbehälters und/oder des Fluides in dem Druckbehälter und/oder der Temperatur des wenigstens einen Ablassventile ein Öffnen des wenigstens einen Ablassventils ausführbar, so dass das Ausleiten des Fluides aus der wenigstens einen Ablassöffnung ausführbar ist. Vorzugsweise ist der Ausleitungsparameter getrennt für je einen Druckbehälter erfassbar und die Steuerung und/oder Regelung, insbesondere das Öffnen, des dem jeweiligen Druckbehälter zugeordneten Ablassventils erfolgt in Abhängigkeit des für diesen jeweiligen Druckbehälter erfassten Ausleitungsparameters. Vorzugsweise umfasst der Ausleitungsparameter zwei Teilausleitungsparameter, nämlich die Temperatur und den Druck.

In einer weiteren Ausgestaltung ist das wenigstens eine Ablassventil mit wenigstens einer Ablassleitung mit der wenigstens einen Ablassöffnung fluidleitend verbunden und der Abstand zwischen dem wenigstens einen Ablassventil und der wenigstens einen Ablassöffnung größer als 0,1 m, 0,2 m, 0,5 m, 1 m oder 2 m ist.

In einer weiteren Variante weist die Ablassöffnung , des Druckbehältersystems einen Abstand von wenigstens 2 m, 1 m, 0,5 m, 0,2 m oder 0,1 m zueinander an dem Kraftfahrzeug auf.

In einer weiteren Variante umfasst das Ableitungssystem je wenigstens einen Sensor zur Erfassung der Umgebungstemperatur und/oder Umgebungsstrahlung in der Umgebung je einer Ablassöffnung und in Abhängigkeit von der mit dem je wenigstens einen Sensor erfassten Umgebungstemperatur und/oder Umgebungsstrahlung das Ausleiten des Fluides aus der je einen Ablassöffnung steuerbar und/oder regelbar ist auch ab oder bei oder während dem Überschreiten des vorgegebenen Grenzwertes des Ausleitungsparameters.

In einer zusätzlichen Ausführungsform sind die Umgebungstemperaturen und/oder Umgebungsstrahlungen in der Umgebung mehrerer Ablassöffnungen simultan erfassbar und nur aus einer Ablassöffnung mit der kleinsten Umgebungstemperatur und/oder kleinsten Umgebungsstrahlung ist das Fluid ausleitbar und an jeder anderen wenigstens einen Ablassöffnung ist das Ausleiten des Fluides blockiert.

In einer ergänzenden Ausgestaltung ist ab dem Überschreiten eines vorgegebenen Grenzwertes der Umgebungstemperatur und/oder Umgebungsstrahlung in der Umgebung der je einen Ablassöffnung das Ausleiten des Fluides aus der je einen Ablassöffnung blockiert und vorzugsweise ist der vorgegebene Grenzwert der Umgebungstemperatur und/oder der Umgebungsstrahlung je einer Ablassöffnung zugeordnet.

In einer weiteren Variante ist ausschließlich ab dem Überschreiten des vorgegebenen Grenzwertes des Ausleitungsparameters das Ausleiten des Fluides aus der je einen Ablassöffnung ausführbar und das Ausleiten des Fluides aus der je einen Ablassöffnung während des Überschreitens des vorgegebenen Grenzwertes des Ausleitungsparameters nur dann blockierbar ist, falls der Grenzwert der Umgebungstemperatur und/oder Umgebungsstrahlung in der Umgebung je einer Ablassöffnung überschritten ist.

In einer zusätzlichen Ausführungsform ist die Blockierung des Ausleitens des Fluides aus der je einen Ablassöffnung ab dem Überschreiten des vorgegebenen Grenzwertes der Umgebungstemperatur und/oder Umgebungsstrahlung in der Umgebung der je einen Ablassöffnung mittels des je einen vollständig geschlossenen Umgebungsventils blockierbar.

In einer weiteren Variante weisen die Ablassöffnungen, insbesondere sämtliche Ablassöffnungen, des Druckbehältersystems einen Abstand von wenigstens 2 m, 1 m, 0,5 m, 0,2 m oder 0,1 m zueinander an dem Kraftfahrzeug auf und/oder die Ablassöffnungen, insbesondere sämtliche Ablassöffnungen, des Druckbehältersystems weisen unterschiedliche Richtungen des Ausleitens des Fluides aus den Ablassöffnungen auf, insbesondere unterscheiden sich die Richtungen des Ausleitens des Fluides aus den Ablassöffnungen um wenigstens 10°, 20°, 30°, 45°, 90° oder 180°.

Zweckmäßig ist das wenigstens eine Umgebungsventil von dem wenigstens einem Ablassventil gebildet, so dass wenigstens ein Ventil sowohl in Abhängigkeit von dem wenigstens einen Ausleitungsparameter als auch in Abhängigkeit von der Umgebungstemperatur und/oder der Umgebungsstrahlung steuerbar und/oder regelbar ist.

In einer zusätzlichen Ausgestaltung ist im Wesentlichen mit je wenigstens einem Sensor die Umgebungstemperatur und/oder die Umgebungsstrahlung, insbesondere Umgebungswärmestrahlung, in der Umgebung von nur einer Ablassöffnung, welche dem je wenigstens einem Sensor zugeordnet ist, erfassbar und mittels der von diesem je wenigstens einem Sensor erfassten Daten zur Umgebungstemperatur und/oder Umgebungsstrahlung ist die Steuerung und oder Regelung nur eines Umgebungsventils, welcher dieser nur einen Ablassöffnung zugeordnet ist, ausführbar.

In einer weiteren Ausgestaltung sind zur Erfassung der Umgebungstemperatur und/oder der Umgebungsstrahlung in der Umgebung von je einer Ablassöffnung wenigstens ein Sensor, insbesondere mehrere Sensoren, ausgebildet.

In einer ergänzenden Variante ist der wenigstens einen Sensor zur Erfassung der Umgebungstemperatur und/oder Umgebungsstrahlung in der Umgebung der wenigstens einen Ablassöffnung ein Sensor zur Erfassung der Temperatur und/oder der Infrarotstrahlung und/oder der Ultraviolettstrahlung und/oder ein pyroelektrischer Sensor und/oder eine Thermosäule und/oder eine Wärmebildkamera und/oder ein Ultraviolettstrahlungs-Fotosensor und/oder ein Sensor zur Erfassung der Wärmestrahlung und/oder ein Flammenwächter und/oder ein Sensor zur Detektion einer Wasserstoffflamme und/oder ein Sensor zur Erfassung von zwei unterschiedlichen Strahlungsfrequenzbereichen, insbesondere von Infrarotstrahlung und Ultraviolettstrahlung, und/oder einem Thermoelement und/oder einer Ionisationselektrode in der Umgebung der wenigstens einen Ablassöffnung. Eine Ionisationselektrode kann eine Flamme in der Umgebung der Ablassöffnung erfassen, weil die Flamme die Luft ionisiert.

In einer weiteren Ausführungsform weist die von dem wenigstens einen Sensor erfassbare Umgebung an je einer Ablassöffnung einen Abstand von weniger als 10 m, 5 m, 2m, 1 m, 0,5 m oder 0,2 m zu der je einen Ablassöffnung auf, insbesondere in einer Richtung des Ausleitens des Fluides aus der Ablassöffnung.

In einer zusätzlichen Variante umfasst das Ableitungssystem ein Betriebsventil.

Vorzugsweise ist das Betriebsventil aktiv schließbar und öffenbar, insbesondere mittels eines Elektromagneten, und vorzugsweise in Abhängigkeit von dem Betriebszustand der Brennstoffzelleneinheit. Während des Betriebes der Brennstoffzelleneinheit ist somit das Betriebsventil geöffnet und in einem abgeschalteten Betriebszustand der Brennstoffzelleneinheit ist das Betriebsventil geschlossen.

In einer ergänzenden Ausführungsform umfasst die Brennstoffzelleneinheit ein Gehäuse und/oder eine Anschlussplatte.

In einer weiteren Variante umfasst die Brennstoffzelleneinheit wenigstens eine Verbindungsvorrichtung, insbesondere mehrere Verbindungsvorrichtungen, und Spannelemente zum Vorspannen des Brennstoffzellenstapels mit einer Druckkraft.

In einer weiteren Ausgestaltung umfassen die Brennstoffzellen jeweils eine Protonenaustauschermembran, eine Anode, eine Kathode, wenigstens eine Gasdiffusionsschicht und wenigstens eine Bipolarplatte.

In einer weiteren Ausführungsform ist die Verbindungsvorrichtung als ein Bolzen ausgebildet und/oder ist stabförmig.

Zweckmäßig sind die Spannelemente als Spannplatten ausgebildet.

In einer weiteren Variante ist die Gasfördervorrichtung als ein Gebläse oder ein Kompressor ausgebildet.

Vorzugsweise ist der Brennstoff Wasserstoff, wasserstoffreiches Gas, Reformatgas oder Erdgas.

Zweckmäßig sind die Brennstoffzellen und/oder Komponenten im Wesentlichen eben und/oder scheibenförmig ausgebildet.

In einer ergänzenden Variante ist das Oxidationsmittel Luft mit Sauerstoff oder reiner Sauerstoff.

Vorzugsweise ist die Brennstoffzelleneinheit eine PEM-Brennstoffzelleneinheit mit PEM-Brennstoffzellen.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: einen Querschnitt eines Druckbehältersystems mit drei Druckbehältern,
- Fig. 2: einen Längsschnitt des Druckbehälters,
- Fig. 3: eine stark vereinfachte Darstellung eines Brennstoffzellensystems mit einer Brennstoffzelleneinheit und einem Druckbehältersystem mit einem Ableitungssystem und
- Fig. 4: eine perspektivische Ansicht eines Kraftfahrzeuges.

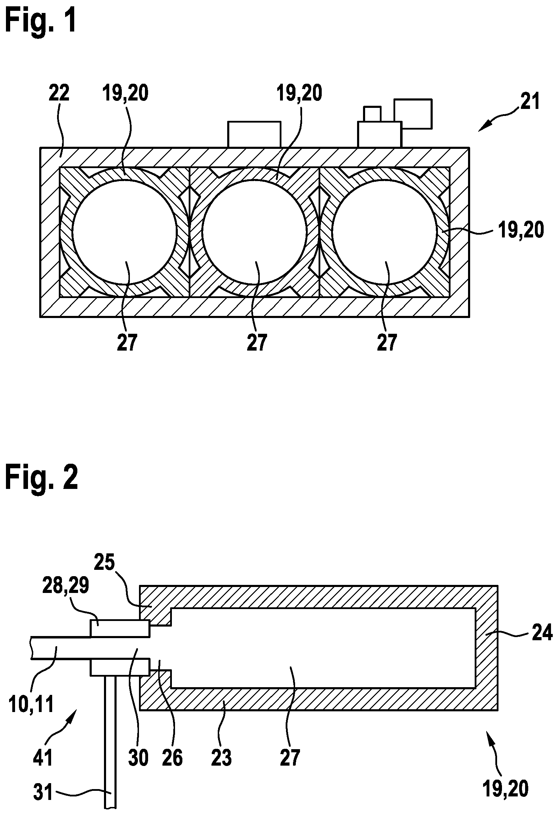

In Fig. 1 ist ein Druckbehältersystem 21 und in Fig. 2 ein Längsschnitt eines Druckbehälters 19 als ein Druckgasspeicher 20 abgebildet. In dem Druckgasspeicher 20 ist ein Fluid, nämlich das Gas Wasserstoff als Brennstoff, unter einem Druck von ungefähr 400 bis 800 bar in einem Innenraum 27 des Druckbehälters 19 gelagert. Der Innenraum 27 ist von einer zylindermantelförmige Behälterseitenwandung 23, einer im Wesentlichen scheibenförmigen Rückwandung 24 und einer ebenfalls im Wesentlichen scheibenförmigen Vorderwandung 25 begrenzt. Die Behälterseitenwandung 23, die Rückwandung 24 und die Vorderwandung 25 ist dabei aus Metall, insbesondere Stahl, oder einem faserverstärkten Kunststoff ausgebildet. In der Vorderwandung 25 ist eine Öffnung 26 ausgebildet. Im Bereich der Öffnung 26 der Vorderwandung 25 ist ein Ablassventil 28 als ein TPRD 29 (temperatur pressure relief device) befestigt. Das Ablassventil 28 weist eine Einleitungsöffnung 30 auf und die Öffnung 26 der Vorderwandung 25 mündet in die Einleitungsöffnung 30. Ferner ist das Ablassventil 28 fluiddicht mit der Vorderwandung 25 verbunden. Ab dem Überschreiten nur eines vorgegebenen Grenzwertes eines Ausleitungsparameters des Ablassventil 28, nämlich dem Ableitungsparameter eines vorgegebenen Druckes des Fluides in dem Innenraum 27 und einer vorgegebenen Temperatur des Ablassventils 28, öffnet das Ablassventil 28 und leitet das Fluid von dem Innenraum 27 des Druckbehälters 19 durch eine Ablassleitung 31 zu einer Ablassöffnung 33 an einem Ende der Ablassleitung 31 in die Umgebung ab. Das Ablassventil 28 ist thermisch gut leitend mit der Vorderwandung 25 des Druckbehälters 19 verbunden, sodass die Temperatur des Fluides in dem Innenraum 27 im Wesentlichen der Temperatur des Ablassventils 28 entspricht. Die vorgegebene Temperatur des Ausleitungsparameters ist beispielsweise 120° C oder 200°C und der vorgegebene Druck des Ausleitungsparameters bei einem maximal zulässigen Betriebsdruck des Druckbehälters 19 von 800 bar beträgt 850 bar. Dies bedeutet, dass bei einem Überschreiten des maximal zulässigen Betriebsdruck des Druckbehälters 19 um 50 bar das Ablassventil 28 geöffnet wird. In dem in Fig. 1 dargestellten Druckbehältersystem 21 sind 3 Druckbehälter 19 angeordnet und von einem im Wesentlichen quaderförmig Gehäuse 22 umschlossen.

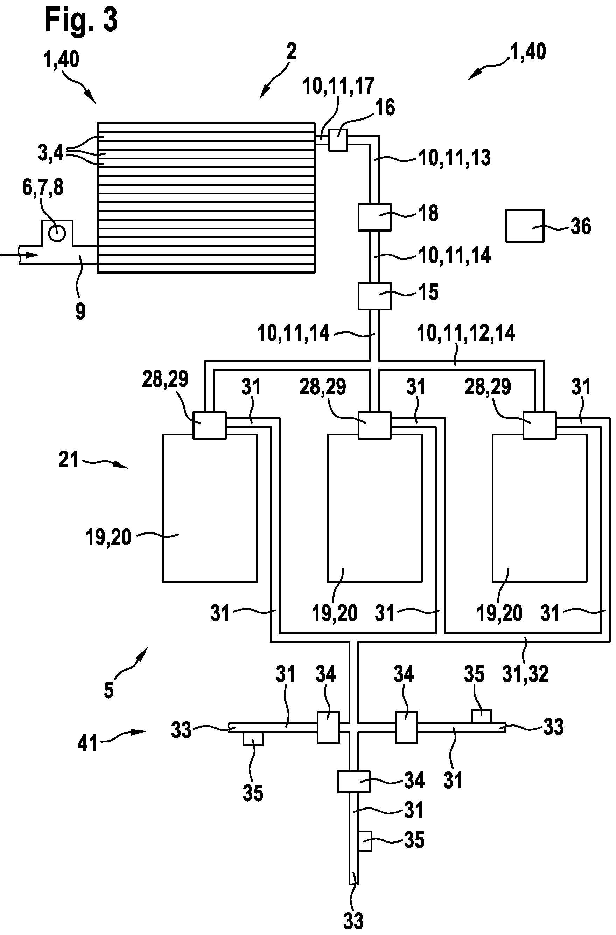

Das Ablassventil 28 ist ferner mit einer Druckleitung 10 als einer Brennstoffleitung 11 verbunden zum Ausleiten des Fluides aus dem Druckbehälter 19 für einen normalen Betrieb einer Brennstoffzelleneinheit 1 (Fig. 3). In Fig. 3 ist ein Brennstoffzellensystem 5 mit dem Druckbehältersystem 21 und einer Brennstoffzelleneinheit 1 dargestellt. Die Brennstoffzelleneinheit 1 umfasst einen Brennstoffzellenstapel 2 als einen Brennstoffzellenstack 2 und der Brennstoffzellenstack 2 ist von einem nicht dargestellten Gehäuse und vorzugsweise einer nicht dargestellten Anschlussplatte umschlossen. In dem Brennstoffzellenstack 2 sind eine große Anzahl an Brennstoffzellen 3, nämlich PEM-Brennstoffzellen 4, gestapelt angeordnet. Aufgrund der großen Anzahl der gestapelten Brennstoffzellen 3 von ungefähr 300 bis 400 Brennstoffzellen 3 sind diese in Fig. 3 aus Vereinfachungsgründen nicht dargestellt. In dem Brennstoffzellenstack 2 sind Kanäle zum Durchleiten des Brennstoffes Wasserstoff, Kanäle zum Durchleiten des Oxidationsmittel Luft und Kanäle zum Durchleiten von Kühlmittel ausgebildet (nicht dargestellt). Der Brennstoff Wasserstoff wird zu Anoden und das Oxidationsmittel Luft wird zu Kathoden der Brennstoffzellen 3 geleitet. Das Oxidationsmittel Luft wird mit einer Zufuhrleitung 9 und einer Gasfördereinrichtung 6, beispielsweise einem Gebläse 7 oder einem Kompressor 8, aus der Luft der Umgebung in den Brennstoffzellenstack 2 eingeleitet.

Der Brennstoff Wasserstoff wird aus dem Druckbehältersystem 21 durch eine Zufuhrleitung 17 in den Brennstoffzellenstack 2 eingeleitet. Die an dem Ablassventil 28 angeschlossene Brennstoffleitung 11 als Druckleitung 10 jeweils an den Druckbehältern 19 münden zunächst in ein Brennstoffleitungsrail 12. Von dem Brennstoffleitungsrail 12 wird der Brennstoff aus den 3 Druckbehältern 19 durch eine Hochdruckleitung 14 mit dem Druck von ungefähr 800 bar einem Betriebsventil 15 zugeführt und von dem Betriebsventil 15 durch eine weitere Hochdruckleitung 14 einem Druckminderer 18. Das Betriebsventil 15 öffnet nur während eines Betriebes der Brennstoffzelleneinheit 1 und bei einer abgeschalteten Brennstoffzelleneinheit 1 ist das Betriebsventil 15 geschlossen. In dem Druckminderer 18 erfolgt eine Reduzierung des Druckes des Brennstoffes in eine Mitteldruckleitung 13 von ungefähr 10 bar bis 20 bar. Aus der Mitteldruckleitung 13 wird der Brennstoff zu einem Injektor 16 oder einem Dosierventil 16 geleitet. An dem Injektor 16 wird der Druck des Brennstoffes auf einen Einblasdruck zwischen 1 bar und 3 bar reduziert. Von dem Injektor 16 wird der Brennstoff der Zufuhrleitung 17 für Brennstoff (Fig. 3) zugeführt und von der Zufuhrleitung 17 den Kanälen für Brennstoff des Brennstoffzellenstacks 2.

Die Ablassventile 28 an den Druckbehältern 19 sind mit Ablassleitungen 31 fluidleitend mit einem gemeinsamen Ableitungsrail 32 verbunden. Von dem gemeinsamen Ableitungsrail 32 zweigen 3 getrennte Ablassleitungen 31 ab und die 3 getrennten Ablassleitung 31 enden jeweils in einer Ablassöffnung 33. Das Brennstoffzellensystem 5 mit dem Ableitungssystem 41 umfasst somit 3 Ablassöffnung 33. In die nur in eine Ablassöffnung 33 mündende Ablassleitung 31 ist je ein Umgebungsventil 34 angeordnet. Mit dem Umgebungsventil 34 kann das Ausleiten des Brennstoffes durch nur eine Ablassöffnung 33 vollständig blockiert werden, indem das Umgebungsventil 34 vollständig geschlossen wird. Die Umgebungsventile 34 können jeweils separat geöffnet und geschlossen werden, d. h. es kann beispielsweise ein Umgebungsventil 34 oder zwei oder drei Umgebungsventile geöffnet sein. In der Nähe oder im Bereich der Ablassöffnung 33, beispielsweise mit einem Abstand von weniger als 30 cm, 20 cm, 10 cm oder 5 cm zu der Ablassöffnung 33, ist ein Sensor 35 zur Erfassung der Temperatur und der Strahlung in der Umgebung der Ablassöffnung 33 angeordnet. Die von den Sensoren 35 erfassten Daten werden mit einer nicht dargestellten Datenleitung zu einer Steuerungs- und/oder Regeleinheit 36 geleitet. In Abhängigkeit von den von den Sensoren 35 erfassten Daten erfolgt die Steuerung und/oder Regelung des Umgebungsventils 34, d. h. ab dem Überschreiten eines vorgegebenen Grenzwertes der Umgebungstemperatur und/oder der Umgebungsstrahlung in der Umgebung an je einer Ablassöffnung 33 wird das dieser Ablassöffnung 33 zugeordnete Umgebungsventil 34 geschlossen und ansonsten, d. h. bei dem Unterschreiten eines vorgegebenen Grenzwertes der Umgebungstemperatur und/oder der Umgebungsstrahlung in der Umgebung an je einer Ablassöffnung 33 geöffnet, so dass, sofern wenigstens ein Ablassventil als weitere Bedingung geöffnet ist, tatsächlich das Fluid ausgeleitet wird. Abweichend hiervon könnte das Ableitungssystem 41 auch zum kontrollierten Ausleiten des Fluides aus wenigstens einer Ablassöffnung 33 verwendet werden ohne dem Überschreiten des Grenzwertes des Ausleitungsparameters, beispielsweise in einem Servicefall in einer Werkstatt. Das Ableitungssystem 41 umfasst somit die Ablassventile 28, die Sensoren 35, die Umgebungsventile 34 und die Ablassleitungen 31.

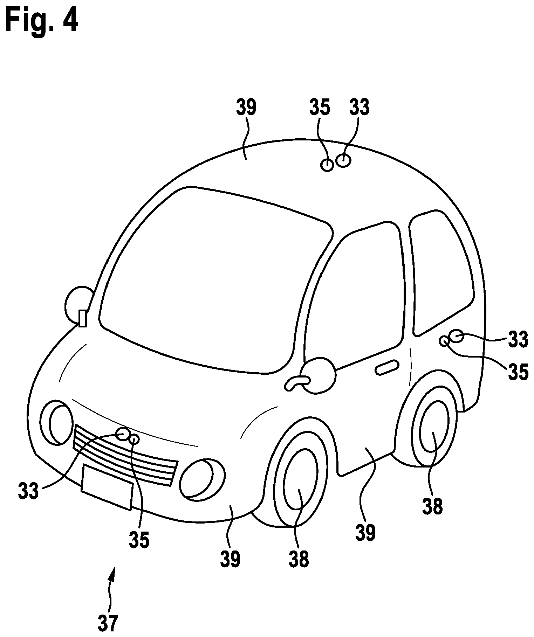

Ein in Fig. 4 dargestelltes Kraftfahrzeug 37, beispielsweise ein Personenkraftwagen oder Lastkraftwagen, umfasst eine Karosserie 39 und 4 Räder 38. In das Kraftfahrzeug 37 ist das in Fig. 3 dargestellte Brennstoffzellensystem 5 mit der Brennstoffzelleneinheit 1 und dem Druckbehältersystem 21 eingebaut. Das Druckbehältersystem 21 umfasst auch das Ableitungssystem 41. Die Brennstoffzelleneinheit 1 wandelt die in dem Brennstoff Wasserstoff vorhandene elektrochemische Energie in elektrische Energie um. Die elektrische Energie als elektrischer Strom, welcher von der Brennstoffzelleneinheit 1 erzeugt wird, wird in dem Kraftfahrzeug 37 insbesondere dazu verwendet, um einen Antriebsmotor als Traktionselektromotor zur Traktion und zum Antrieb des Kraftfahrzeuges 37 mit elektrischer Energie zu versorgen.

Das Druckbehältersystem 21 ist untenseitig unter der Karosserie 39 des Kraftfahrzeuges 37 befestigt. Bei bestimmten Betriebszuständen, beispielsweise bei einem Unfall und/oder einem Brand unter der Karosserie 39 des Kraftfahrzeuges 37 ist es aus Sicherheitsgründen notwendig, den Brennstoff in dem Druckbehälter 19 unverzüglich in kurzer Zeit in die Umgebung abzuleiten. Eine Wasserstoffflamme verbrennt nicht sichtbar, sodass Gegenstände in der Umgebung der Ablassöffnung 33 mit einer hohen Temperatur, Funken oder bereits vorhandene Flammen in der Umgebung der Ablassöffnung 33 den aus den Ablassöffnung 33 abgeleiteten Wasserstoff entzünden könnten, sodass dadurch die gefährliche unsichtbare Wasserstoffflamme entstehen würde. Um dies zu vermeiden, wird mit den Sensoren 35 die Umgebungstemperatur und die Umgebungsstrahlung, insbesondere die Umgebungswärmestrahlung, im Bereich, d. h. in der Nähe als der Umgebung der Ablassöffnungen 33, erfasst und bei einem Überschreiten eines Grenzwertes an je einer Ablassöffnung 33 wird das dieser Ablassöffnung 33 zugeordnete Umgebungsventil 34 von der Steuerungs- und/oder Regeleinheit 36 geschlossen. Damit wird das Ausleiten des Brennstoffes in den besonderen Betriebszuständen aus den Druckbehältern 19 nur an derjenigen wenigstens einen Ablassöffnung 33 ausgeführt, welche den Grenzwert nicht überschreitet und somit auch keine Gefahr für eine Entzündung des aus der Ablassöffnung 33 abgeleiteten Brennstoffes besteht.

In einem weiteren, nicht dargestellten Ausführungsbeispiel sind das Ablassventil 28 und das Umgebungsventil 34 von nur einem Ventil gebildet. Im Nachfolgenden werden im Wesentlichen nur die Unterschiede zu dem in Fig. 3 dargestellten Ausführungsbeispiel beschrieben. An den Druckbehältern 19 sind Sensoren zur Erfassung des Druckes und der Temperatur des Fluides in den Druckbehältern 19 angeordnet. Die Ventile an den Druckbehältern 19 münden in nur eine Ablassleitung 31 und diese in nur eine Ablassöffnung 33. Mittels der Steuerungs- und/oder Regeleinheit 36 werden diese 3 Ventile an den 3 Druckbehältern 19 jeweils nur dann geöffnet, wenn sowohl der Grenzwert des Ausleitungsparameters in dem jeweiligen Druckbehältern 19 überschritten ist und zusätzlich der vorgegebene Grenzwert der Umgebungstemperatur und/oder der Umgebungsstrahlung, welcher von dem Sensor 35 erfasst wird, nicht überschritten wird.

In einem weiteren, nicht dargestellten Ausführungsbeispiel umfasst das Druckbehältersystem 21 nur eine Ablassöffnung 33 und nur einen Sensor 35. Im Nachfolgenden werden im Wesentlichen nur die Unterschiede zu dem in Fig. 3 dargestellten Ausführungsbeispiel beschrieben. Die Ausleitung des brennbaren Fluides als dem Brennstoff Wasserstoff aus der nur einen Ablassöffnung 33 wird somit auch bei einem Überschreiten des vorgegebenen Grenzwertes des Ausleitungsparameters nur dann ausgeführt, wenn an der nur einen Ablassöffnung 33 der von dem nur einen Sensor 35 erfasste Grenzwert der Umgebungstemperatur und/oder der Umgebungsstrahlung nicht überschritten ist.

Insgesamt betrachtet sind mit dem erfindungsgemäßen Ableitungssystem 41, dem erfindungsgemäßen Druckbehältersystem 21, dem erfindungsgemäßen Brennstoffzellensystem 5 und dem erfindungsgemäßen Kraftfahrzeug 37 wesentliche Vorteile verbunden. In besonderen Betriebszuständen, insbesondere bei einem Unfall oder einem Brand, ist die Ausleitung des Brennstoffes aus dem Druckbehälter 19 in die Umgebung notwendig in kurzer Zeit. Aufgrund der Erfassung der Umgebungstemperatur und/oder der Umgebungsstrahlung in der Umgebung der Ablassöffnungen 33 mit den Sensoren 35 wird der Brennstoff nur an denjenigen Ablassöffnungen 33 in die Umgebung abgeleitet, bei denen keine Gefahr eines Entzündens des ausgeleiteten Brennstoffes zu einer gefährlichen Wasserstoffflamme besteht. Damit kann bei der Verwendung des Ableitungssystem 41 und des Druckbehältersystems 21 in dem Kraftfahrzeug 37 die Betriebssicherheit wesentlich verbessert werden. Wasserstoffflammen sind optisch nicht sichtbar und stellen dadurch insbesondere für Rettungskräfte bei einem Unfall mit dem Kraftfahrzeug 37 eine wesentliche Gefahr dar, sodass mit dem erfindungsgemäßen Kraftfahrzeug 37 die Sicherheit bei einem Unfall wesentlich erhöht ist.

## Patentansprüche

1. Ableitungssystem (41) für einen mit einem brennbaren Fluid befüllten wenigstens einen Druckbehälter (19) zur Ausleitung des brennbaren Fluides aus dem wenigstens einen Druckbehälter (19) in die Umgebung, umfassend
- wenigstens ein Ablassventil (28) dafür konfiguriert zum Ausleiten des Fluides aus dem wenigstens einen Druckbehälter (19) ab Überschreitung eines vorgegebenen Grenzwertes eines Ausleitungsparameters,
- wenigstens eine Einleitungsöffnung (30) dafür konfiguriert zum Einleiten des Fluides von dem wenigstens einen Druckbehälter (19) in das wenigstens eine Ablassventil (28),
- wenigstens eine Ablassöffnung (33) dafür konfiguriert zum Ausleiten des Fluides in die Umgebung,
- wobei das Ableitungssystem wenigstens einen Sensor (35) umfasst und in Abhängigkeit von dem das Ausleiten des Fluides aus der wenigstens einen Ablassöffnung steuerbar und/oder regelbar ist auch ab dem Überschreiten des vorgegebenen Grenzwertes des Ausleitungsparameters;
**dadurch gekennzeichnet, dass**
der Sensor einen Sensor zur Erfassung der Umgebungstemperatur und/oder Umgebungsstrahlung in der Umgebung der wenigstens einen Ablassöffnung umfasst, und in Abhängigkeit von der mit dem wenigstens einen Sensor erfassten Umgebungstemperatur und/oder Umgebungsstrahlung das Ausleiten des Fluides aus der wenigstens einen Ablassöffnung steuerbar und/oder regelbar ist.

2. Ableitungssystem nach Anspruch 1,
**dadurch gekennzeichnet, dass** das Ableitungssystem dafür konfiguriert ist ab dem Überschreiten wenigstens eines vorgegebenen Grenzwertes der Umgebungstemperatur und/oder Umgebungsstrahlung in der Umgebung der wenigstens einen Ablassöffnung (33) das Ausleiten des Fluides aus wenigstens einer Ablassöffnung (33) blockierbar ist.

3. Ableitungssystem nach Anspruch 1 oder 2,
**dadurch gekennzeichnet, dass** das Ableitungssystem dafür konfiguriert ist ab dem Überschreiten eines vorgegebenen Grenzwertes der Umgebungstemperatur und/oder Umgebungsstrahlung in der Umgebung einer Ablassöffnung (33), insbesondere sämtlichen Ablassöffnungen (33), das Ausleiten des Fluides aus einer, insbesondere nur einer, Ablassöffnung (33) ausführbar ist und vorzugsweise das Ausleiten aus den anderen Ablassöffnungen (33), insbesondere sämtlichen anderen Ablassöffnungen (33), blockierbar ist.

4. Ableitungssystem nach einem oder mehreren der vorhergehenden Ansprüche,
**dadurch gekennzeichnet, dass** das Ableitungssystem dafür konfiguriert ist ausschließlich ab dem Überschreiten des vorgegebenen Grenzwertes des Ausleitungsparameters das Ausleiten des Fluides aus der wenigstens einen Ablassöffnung (33) ausführbar ist und das Ausleiten des Fluides aus der wenigstens einen Ablassöffnung (33) während des Überschreitens des vorgegebenen Grenzwertes des Ausleitungsparameters nur dann blockierbar ist, falls der Grenzwert der Umgebungstemperatur und/oder Umgebungsstrahlung in der Umgebung je einer Ablassöffnung (33) überschritten ist.

5. Ableitungssystem nach einem oder mehreren der vorhergehenden Ansprüche,
**dadurch gekennzeichnet, dass** das Ableitungssystem dafür konfiguriert ist das Ausleiten des Fluides aus der wenigstens einen Ablassöffnung (33) ab dem Überschreiten des vorgegebenen Grenzwertes der Umgebungstemperatur und/oder Umgebungsstrahlung in der Umgebung der wenigstens einen Ablassöffnung (33) mittels wenigstens eines Umgebungsventils (34) blockierbar ist.

6. Ableitungssystem nach Anspruch 5,
**dadurch gekennzeichnet, dass**
je einer Ablassöffnung (33) ein Umgebungsventil (34) zugeordnet ist.

7. Ableitungssystem nach Anspruch 5 oder 6,
**dadurch gekennzeichnet, dass**
das wenigstens eine Umgebungsventil (34) ein zusätzliches Ventil (34) ist in Ergänzung zu dem Ablassventil (28).

8. Ableitungssystem nach einem oder mehreren der vorhergehenden Ansprüche,
**dadurch gekennzeichnet, dass**
das Ableitungssystem (41) mehrere Ablassöffnungen (33) umfasst und die Umgebungstemperaturen und/oder Umgebungsstrahlungen an den Ablassöffnungen (33) getrennt erfassbar sind.

9. Ableitungssystem nach einem oder mehreren der vorhergehenden Ansprüche,
**dadurch gekennzeichnet, dass**
das Ableitungssystem (41) mehrere Sensoren (35) zur Erfassung der Umgebungstemperatur und/oder Umgebungsstrahlung in der Umgebung der wenigstens einen Ablassöffnung (33) umfasst, insbesondere je einer Ablassöffnung (33) je wenigstens ein Sensor (35) zur Erfassung der Umgebungstemperatur und/oder Umgebungsstrahlung in der Umgebung der je einen Ablassöffnung (33) zugeordnet ist.

10. Ableitungssystem nach einem oder mehreren der vorhergehenden Ansprüche,
**dadurch gekennzeichnet, dass**
die Umgebungstemperaturen und/oder Umgebungsstrahlungen in der Umgebung mehrerer Ablassöffnungen (33) simultan erfassbar sind und je größer die Umgebungstemperatur und/oder Umgebungsstrahlung an je einer Ablassöffnung (33) ist, desto kleiner ist der aus der Ablassöffnung (33) ausleitbare Volumenstrom des Fluides und umgekehrt.

11. Ableitungssystem nach einem oder mehreren der vorhergehenden Ansprüche,
**dadurch gekennzeichnet, dass**
die Umgebungstemperaturen und/oder Umgebungsstrahlungen in der Umgebung mehrerer Ablassöffnungen (33) simultan erfassbar sind und ab dem Überschreiten des vorgegebenen Grenzwertes der Umgebungstemperatur und/oder Umgebungsstrahlung in der Umgebung je einer Ablassöffnung (33) das Ausleiten des Fluides aus der je einen Ablassöffnung (33) blockierbar ist und/oder ab dem Unterschreiten des vorgegebenen Grenzwertes der Umgebungstemperatur und/oder Umgebungsstrahlung in der Umgebung je einer Ablassöffnung (33) das der je einen Ablassöffnung (33) zugeordnete wenigstens eine Umgebungsventil (34) vollständig geöffnet ist.

12. Druckbehältersystem (21), umfassend
- wenigstens einen Druckbehälter (19) zur Befüllung mit einem brennbaren Fluid,
- ein Ableitungssystem (41) für den mit dem brennbaren Fluid befüllbaren wenigstens einen Druckbehälter (19) zur Ausleitung des brennbaren Fluides aus dem wenigstens einen Druckbehälter (19) in die Umgebung ab dem Überschreiten eines vorgegebenen Grenzwertes des Ausleitungsparameters,
**dadurch gekennzeichnet, dass**
das Ableitungssystem (41) gemäß einem oder mehrerer der vorhergehenden Ansprüche ausgebildet ist.

13. Brennstoffzellensystem (4), insbesondere für ein Kraftfahrzeug (37), umfassend
- eine Brennstoffzelleneinheit (1),
- ein Druckbehältersystem (21) mit wenigstens einem Druckbehälter (19) zur Befüllung mit einem brennbaren Fluid und einem Ableitungssystem (41) für den mit dem brennbaren Fluid befüllbaren wenigstens einen Druckbehälter (19) zur Ausleitung des brennbaren Fluides aus dem wenigstens einen Druckbehälter (19) in die Umgebung ab dem Überschreiten eines vorgegebenen Grenzwertes des Ausleitungsparameters,
- eine Gasfördervorrichtung (6) zur Förderung eines gasförmigen Oxidationsmittels zu Kathoden der Brennstoffzellen (2, 3),
**dadurch gekennzeichnet, dass**
das Druckbehältersystem (21) gemäß Anspruch 12 ausgebildet ist.

14. Kraftfahrzeug (37), umfassend
- eine Karosserie (39),
- mehrere Räder (38),
- ein Druckbehältersystem (21), umfassend wenigstens einem Druckbehälter (19) zur Befüllung mit einem brennbaren Fluid und ein Ableitungssystem (41) für den mit dem brennbaren Fluid befüllbaren wenigstens einen Druckbehälter (19) zur Ausleitung des brennbaren Fluides aus dem wenigstens einen Druckbehälter (19) in die Umgebung ab dem Überschreiten eines vorgegebenen Grenzwertes des Ausleitungsparameters,
- wenigstens eine Umwandlungseinheit (40) als eine Brennstoffzelleneinheit (1) und/oder einen Verbrennungsmotor, welcher mit dem brennbaren Fluid aus dem Druckbehältersystem (21) betreibbar ist,
**dadurch gekennzeichnet, dass**
das Druckbehältersystem (21) gemäß Anspruch 12 ausgebildet ist.

15. Kraftfahrzeug nach Anspruch 14,
**dadurch gekennzeichnet, dass**
die Ablassöffnung (33) des Druckbehältersystems (21) einen Abstand von wenigstens 2 m, 1 m, 0,5 m, 0,2 m oder 0,1 m zueinander an dem Kraftfahrzeug (37) aufweist.

## Claims

1. Discharge system (41) for at least one pressure vessel (19), filled with a combustible fluid, for releasing the combustible fluid from the at least one pressure vessel (19) into the surroundings, comprising:
- at least one drain valve (28) configured to release the fluid from the at least one pressure vessel (19) when a predefined limit value of a release parameter is exceeded,
- at least one admission opening (30) configured to introduce the fluid from the at least one pressure vessel (19) into the at least one drain valve (28),
- at least one drain opening (33) configured to release the fluid into the surroundings,
- wherein the discharge system comprises at least one sensor (35) and, based on this, the release of the fluid from the at least one drain opening can be controlled in an open-loop and/or a closed-loop manner, even after the predefined limit value of the release parameter has been exceeded;
**characterized in that**
the sensor comprises a sensor for detecting the ambient temperature and/or ambient radiation in the vicinity of the at least one drain opening, and, depending on the ambient temperature and/or ambient radiation detected by the at least one sensor, the release of the fluid from the at least one drain opening can be controlled in an open-loop and/or a closed-loop manner.

2. Discharge system according to Claim 1,
**characterized in that** the discharge system is configured so that the release of the fluid from at least one drain opening (33) can be blocked after at least one predefined limit value of the ambient temperature and/or ambient radiation in the vicinity of the at least one drain opening (33) has been exceeded.

3. Discharge system according to Claim 1 or 2,
**characterized in that** the discharge system is configured so that the release of fluid from one, in particular only one, drain opening (33) can be enabled and preferably the release from the other drain openings (33), in particular all other drain openings (33), can be blocked after a predefined limit value of the ambient temperature and/or ambient radiation in the vicinity of a drain opening (33), in particular all drain openings (33), has been exceeded.

4. Discharge system according to one or more of the preceding claims, **characterized in that** the discharge system is configured so that the release of the fluid from the at least one drain opening (33) can only be enabled after the predefined limit value of the release parameter has been exceeded, and the release of the fluid from the at least one drain opening (33) can only be blocked while the predefined limit value of the release parameter is being exceeded if the limit value of the ambient temperature and/or ambient radiation in the vicinity of each drain opening ( 33) is exceeded.

5. Discharge system according to one or more of the preceding claims, **characterized in that** the discharge system is configured so that the release of the fluid from the at least one drain opening (33) can be blocked by means of at least one ambient valve (34) after the predefined limit value of the ambient temperature and/or ambient radiation in the vicinity of the at least one drain opening (33) has been exceeded.

6. Discharge system according to Claim 5,
**characterized in that**
one ambient valve (34) is assigned to each drain opening (33).

7. Discharge system according to Claim 5 or 6,
**characterized in that**
the at least one ambient valve (34) is an additional valve (34) in addition to the drain valve (28).

8. Discharge system according to one or more of the preceding claims, **characterized in that**
the discharge system (41) comprises multiple drain openings (33) and the ambient temperatures and/or ambient radiation at the drain openings (33) can be detected separately.

9. Discharge system according to one or more of the preceding claims, **characterized in that**
the discharge system (41) comprises multiple sensors (35) for detecting the ambient temperature and/or ambient radiation in the vicinity of the at least one drain opening (33), in particular each drain opening (33) has at least one assigned sensor (35) for detecting the ambient temperature and/or ambient radiation in the vicinity of each drain opening (33).

10. Discharge system according to one or more of the preceding claims, **characterized in that**
the ambient temperatures and/or ambient radiation in the vicinity of multiple drain openings (33) can be detected simultaneously and the greater the ambient temperature and/or ambient radiation at one drain opening (33), the smaller the volume flow of fluid that can be released from the drain opening (33) and vice versa.

11. Discharge system according to one or more of the preceding claims, **characterized in that**
the ambient temperatures and/or ambient radiation in the vicinity of multiple drain openings (33) can be detected simultaneously and, after the predefined limit value of the ambient temperature and/or ambient radiation in the vicinity of a respective drain opening (33) has been exceeded, the release of the fluid from the respective drain opening (33) can be blocked and/or after the predefined limit value of the ambient temperature and/or ambient radiation in the vicinity of a respective drain opening (33) has been undershot, the at least one ambient valve (34) assigned to the respective drain opening (33) is fully open.

12. Pressure vessel system (21), comprising
- at least one pressure vessel (19) for filling with a combustible fluid,
- a discharge system (41) for the at least one pressure vessel (19), which can be filled with the combustible fluid, for releasing the combustible fluid from the at least one pressure vessel (19) into the surroundings after a predefined limit value of the release parameter has been exceeded,
**characterized in that**
the discharge system (41) is designed according to one or more of the preceding claims.

13. Fuel cell system (4), in particular for a motor vehicle (37), comprising
- a fuel cell unit (1),
- a pressure vessel system (21) having at least one pressure vessel (19) for filling with a combustible fluid and a discharge system (41) for the at least one pressure vessel (19), which can be filled with the combustible fluid, for releasing the combustible fluid from the at least one pressure vessel (19) into the surroundings after a predefined limit value of the release parameter has been exceeded,
- a gas conveying device (6) for conveying a gaseous oxidizing agent to cathodes of fuel cells (2, 3),
**characterized in that**
the pressure vessel system (21) is designed according to Claim 12.

14. Motor vehicle (37), comprising
- a body (39),
- multiple wheels (38),
- a pressure vessel system (21) comprising at least one pressure vessel (19) for filling with a combustible fluid and a discharge system (41) for the at least one pressure vessel (19), which can be filled with the combustible fluid, for releasing the combustible fluid from the at least one pressure vessel (19) into the surroundings after a predefined limit value of the release parameter has been exceeded,
- at least one conversion unit (40) as a fuel cell unit (1) and/or an internal combustion engine which can be operated using the combustible fluid from the pressure vessel system (21),
**characterized in that**
the pressure vessel system (21) is designed according to Claim 12.

15. Motor vehicle according to Claim 14,
**characterized in that**
the drain openings (33) of the pressure vessel system (21) are at a distance of at least 2 m, 1 m, 0.5 m, 0.2 m or 0.1 m from one another on the motor vehicle (37).

## Revendications

1. Système de dérivation (41) pour au moins un récipient sous pression (19) rempli d'un fluide combustible, servant à faire sortir le fluide combustible de l'au moins un récipient sous pression (19) dans l'environnement, comprenant
- au moins une soupape de sortie (28) configurée pour faire sortir le fluide de l'au moins un récipient sous pression (19) à partir du moment où une valeur limite prédéfinie d'un paramètre de sortie est dépassée,
- au moins une ouverture d'entrée (30) configurée pour faire entrer le fluide provenant de l'au moins un récipient sous pression (19) dans l'au moins une soupape de sortie (28),
- au moins une ouverture de sortie (33) configurée pour faire sortir le fluide dans l'environnement,
- le système de dérivation comprenant au moins un capteur (35) et, en fonction de la valeur détectée par celui-ci, la sortie du fluide par l'au moins une ouverture de sortie pouvant être commandée et/ou réglée, même à partir du moment où la valeur limite prédéfinie du paramètre de sortie est dépassée ; **caractérisé en ce que**
le capteur comprend un capteur destiné à détecter la température ambiante et/ou le rayonnement ambiant dans l'environnement de l'au moins une ouverture de sortie, et **en ce que** la sortie du fluide par l'au moins une ouverture de sortie peut être commandée et/ou réglée en fonction de la température ambiante et/ou du rayonnement ambiant détectés par l'au moins un capteur.

2. Système de dérivation selon la revendication 1,
**caractérisé en ce que** le système de dérivation est configuré pour que, à partir du moment où au moins une valeur limite prédéfinie de la température ambiante et/ou du rayonnement ambiant dans l'environnement de l'au moins une ouverture de sortie (33) est dépassée, la sortie du fluide par l'au moins une ouverture de sortie (33) puisse être bloquée.

3. Système de dérivation selon la revendication 1 ou 2,
**caractérisé en ce que** le système de dérivation est configuré pour que, à partir du moment où une valeur limite prédéfinie de la température ambiante et/ou du rayonnement ambiant dans l'environnement d'une ouverture de sortie (33), en particulier de toutes les ouvertures de sortie (33), est dépassée, la sortie du fluide puisse être effectuée par une, en particulier par une seule, ouverture de sortie (33), et de préférence pour que la sortie par les autres ouvertures de sortie (33), en particulier par toutes les autres ouvertures de sortie (33), puisse être bloquée.

4. Système de dérivation selon une ou plusieurs des revendications précédentes,
**caractérisé en ce que** le système de dérivation est configuré pour que la sortie du fluide par l'au moins une ouverture de sortie (33) ne puisse être effectuée qu'à partir du moment où la valeur limite prédéfinie du paramètre de sortie est dépassée, et pour que la sortie du fluide par l'au moins une ouverture de sortie (33) pendant le dépassement de la valeur limite prédéfinie du paramètre de sortie ne puisse être bloquée que si la valeur limite de la température ambiante et/ou du rayonnement ambiant dans l'environnement de chaque ouverture de sortie (33) est dépassée.

5. Système de dérivation selon une ou plusieurs des revendications précédentes,
**caractérisé en ce que** le système de dérivation est configuré pour que la sortie du fluide par l'au moins une ouverture de sortie (33), à partir du moment où la valeur limite prédéfinie de la température ambiante et/ou du rayonnement ambiant dans l'environnement de l'au moins une ouverture de sortie (33) est dépassée, puisse être bloquée au moyen d'au moins une soupape d'air ambiant (34).

6. Système de dérivation selon la revendication 5,
**caractérisé en ce que**
une soupape d'air ambiant (34) est associée à chaque ouverture de sortie (33).

7. Système de dérivation selon la revendication 5 ou 6,
**caractérisé en ce que**
l'au moins une soupape d'air ambiant (34) est une soupape supplémentaire (34) en complément de la soupape de sortie (28).

8. Système de dérivation selon une ou plusieurs des revendications précédentes,
**caractérisé en ce que**
le système de dérivation (41) comprend plusieurs ouvertures de sortie (33) et les températures ambiantes et/ou les rayonnements ambiants au niveau des ouvertures de sortie (33) peuvent être détectés séparément.

9. Système de dérivation selon une ou plusieurs des revendications précédentes,
**caractérisé en ce que**
le système de dérivation (41) comprend plusieurs capteurs (35) pour détecter la température ambiante et/ou le rayonnement ambiant dans l'environnement de l'au moins une ouverture de sortie (33), en particulier **en ce qu'**à chaque ouverture de sortie (33) est associé au moins un capteur (35) respectif destiné à détecter la température ambiante et/ou le rayonnement ambiant dans l'environnement de ladite ouverture de sortie (33).

10. Système de dérivation selon une ou plusieurs des revendications précédentes,
**caractérisé en ce que**
les températures ambiantes et/ou les rayonnements ambiants dans l'environnement de plusieurs ouvertures de sortie (33) peuvent être détectés simultanément et **en ce que** plus la température ambiante et/ou le rayonnement ambiant au niveau de chaque ouverture de sortie (33) sont élevés, plus le débit volumique du fluide pouvant sortir par l'ouverture de sortie (33) est faible, et inversement.

11. Système de dérivation selon une ou plusieurs des revendications précédentes,
**caractérisé en ce que**
les températures ambiantes et/ou les rayonnements ambiants dans l'environnement de plusieurs ouvertures de sortie (33) peuvent être détectés simultanément et **en ce que**, à partir du moment où la valeur limite prédéfinie de la température ambiante et/ou du rayonnement ambiant dans l'environnement de chaque ouverture de sortie (33) est dépassée, la sortie du fluide par ladite ouverture de sortie (33) peut être bloquée et/ou **en ce que**, à partir du passage en deçà de la valeur limite prédéfinie de la température ambiante et/ou du rayonnement ambiant dans l'environnement de chaque ouverture de sortie (33), l'au moins une soupape d'air ambiant (34) associée à ladite ouverture de sortie (33) est complètement ouverte.

12. Système de récipient sous pression (21) comprenant
- au moins un récipient sous pression (19) destiné à être rempli d'un fluide combustible,
- un système de dérivation (41) pour l'au moins un récipient sous pression (19) pouvant être rempli du fluide combustible, servant à faire sortir le fluide combustible de l'au moins un récipient sous pression (19) dans l'environnement à partir du moment où une valeur limite prédéfinie du paramètre de sortie est dépassée,
**caractérisé en ce que**
le système de dérivation (41) est conçu conformément au système selon l'une ou plusieurs des revendications précédentes.

13. Système de piles à combustible (4), notamment pour un véhicule automobile (37), comprenant
- une unité de piles à combustible (1),
- un système de récipient sous pression (21) comprenant au moins un récipient sous pression (19) destiné à être rempli d'un fluide combustible et un système de dérivation (41) pour l'au moins un récipient sous pression (19) pouvant être rempli du fluide combustible, servant à faire sortir le fluide combustible du ou des récipients sous pression (19) dans l'environnement à partir du moment où une valeur limite prédéfinie du paramètre de sortie est dépassée,
- un dispositif de transport de gaz (6) pour transporter un comburant gazeux vers des cathodes des piles à combustible (2, 3),
**caractérisé en ce que**
le système de récipient sous pression (21) est conçu selon la revendication 12.

14. Véhicule automobile (37), comprenant
- une carrosserie (39),
- plusieurs roues (38),
- un système de récipient sous pression (21), comprenant au moins un récipient sous pression (19) destiné à être rempli d'un fluide combustible et un système de dérivation (41) pour l'au moins un récipient sous pression (19) pouvant être rempli du fluide combustible, servant à faire sortir le fluide combustible de l'au moins un récipient sous pression (19) dans l'environnement à partir du moment où une valeur limite prédéfinie du paramètre de sortie est dépassée,
- au moins une unité de conversion (40) sous la forme d'une unité de piles à combustible (1) et/ou d'un moteur à combustion interne pouvant fonctionner avec le fluide combustible provenant du système de récipient sous pression (21),
**caractérisé en ce que**
le système de récipient sous pression (21) est conçu selon la revendication 12.

15. Véhicule automobile selon la revendication 14,
**caractérisé en ce que**
les ouvertures de sortie (33) du système de récipient sous pression (21) présentent, sur le véhicule automobile (37), une distance d'au moins 2 m, 1 m, 0,5 m, 0,2 m ou 0,1 m les unes par rapport aux autres.
